# EUROPEAN PATENT SPECIFICATION

(11) **EP 3 426 844 B1**
(45) Date of publication and mention of the grant of the patent: **08.04.2020**
(21) Application number: 16721974.0
(22) Date of filing: 06.03.2016
(51) Int. Cl.: E01F 8/00, B32B 17/10

(54) **METHOD FOR PANEL MANUFACTURING, PARTICULARLY ANTI-NOISE**
VERFAHREN ZUR PLATTENHERSTELLUNG, INSBESONDERE LÄRMSCHUTZPLATTEN
PROCÉDÉ DE FABRICATION DE PANNEAU, EN PARTICULIER ANTI-BRUIT

(43) Date of publication of application: 16.01.2019
(73) Proprietor: AKRIPOL proizvodnja in predelava polimerov, d.o.o., 8210 Trebnje (SI)
(72) Inventor: JAPELJ, Bostjan, 1000 Ljubljana (SI); BUNDERSEK, Alenka, 8210 Trebnje (SI)
(74) Representative: Marn, Jure
(86) International application number: PCT/SI2016/000009
(87) International publication number: WO 2017/155477

(56) References cited:
- EP-A2- 0 407 852
- DE-U1- 29 521 460
- US-A- 5 219 630

## Description

### Field of technology

Panel manufacturing, acrylic panels

### Technical problem

Technical problem to be solved by this invention, is manufacturing of panels comprising strings as part of acrylic panels which are too close to a surface, and may, under certain conditions, such as strike from outside, emerge from said panel surface.

### State of the art

Anti noise panels based on acrylic with embedded reinforcing monofilament fiber and their manufacturing have been described in EP 0 407 852 A. Therein, the document describes panels having, in relation to their cross-section, approximately centrally placed monofilament threads of polyamide or two-dimensional mesh fabric manufactured therefrom. Manufacturing of these panels is carried out so that the monofilament threads having a diameter of 0.2 to 2 mm are stretched through a mould, after which said mould is filled by pouring in a prepolymer on the basis of acrylates. According to one embodiment the threads are arranged in parallel, wherein the distance between the filaments is between 8 and 100 mm, the threads may also be in the form of a net (i.e. the threads are placed at an angle of 90 °).

Document EP 0826832 A2 describes the anti-noise panels with antifragmentation properties made of acrylic polymers and with embedded monofilament threads which are not placed centrally with respect to the cross section of the plate. Threads are placed at a thickness between 20 and 35% of the total thickness of the plate, namely, toward the surface opposite to that which is exposed to vehicle impact or shock. It follows that because of the position of the fiber it matters which panel surface is exposed to shock or a collision of the vehicle, meaning that the plate with respect to its mechanical properties is defined as a "two-sided" - one side of the panel is essentially more reinforced against the mechanical stresses than the other. The document also describes that a monofilament thread has diameter between 0.1 and 4 mm, preferably between 2 and 3 mm. Threads or bands made of them are located within a distance of 10 to 100 mm from each other. Also in this case it is a planar structure embedded threads (the threads are in one level) i.e. as taut threads, net or bands. Monofilament threads are stretched through a mould, either in parallel or in the form of strips or networks. In the case of strip they have a width of 5-25 mm and a thickness equal to that of a monofilament thread, from which they are made. The document does not describe neither how filaments are incorporated into the plate nor how to achieve appropriate location embedded either in the course of the manufacturing process of panels or during polymerization of polymethylmethacrylate (PMMA).

In addition EP 1119662 B1 (WO 00/20690 A1) describes the anti-noise panels made of acrylic glass having an acrylic matrix includeing a monofilament thread for the purpose of improving the antifragmentation properties. The maximum deviation is 1 mm or more, preferably 5 mm from an imaginary straight line which runs through the end of this thread. Polyamide or polypropylene threads can be inserted into the panel transversely or parallel to the plane of the plate. Threads may be included so that they are parallel to each other and run in one direction, but can run parallel to each other in several directions. The diameter of the threads is between 0.2 and 2.0 mm, the distance between adjacent threads could be in the range between 8 and 100 mm. One of the embodiments show that the threads are inserted so that the cross-section displays wavy arrangement of threads. Also in this case, threads are arranged in parallel and substantially planar. The examples show that also in this case the threads are positioned through the mould but in relaxed manner.

Document EP1936035 refers to a protection Aglas SS PA6 panels on the basis of polymethylmethacrylate (so called acrylic glass) with embedded reinforcing polymer monofilament fibers in the form of a three-dimensional fiber entanglement, wherein the reinforcing polymer monofilament fibers in a matrix of polymethylmethacrylate is included so that the fibers therein are oriented in all directions and distributed apparently uniformly in all directions, so that they are apparently uniformly distributed essentially throughout the entire cross-section of the panel i.e. throughout its entire volume. These panels due to embedded reinforcing polymer monofilament fibers (reinforcement mesh) also have good anti-noise as well as anti-breakage and antifragmentation properties.

### Description of new invention

Method for panel manufacturing according to claim 1, that solves the above mentioned technical problem in a way that the reinforcing strings are positioned inside said panel by means of two opposing spacers, preferably double seals. Said method is comprised of several basic steps. First, a first spacer is positioned onto a first base plate. Then, reinforcing strings are placed onto said first spacer by means of a frame assembled to a second base plate, as defined in claim 1. In such a way there is an intermediate space formed between said first base plate and said second base plate. This intermediate space is then filled with a filler, at least partially fluid and / or able to creep. This filler is preferably selected from an acrylic binder, a prepolymer partially polymerized MMA (methylmethacrylate), polymethylmethacrylate (PMMA), or a mixture of other acrylic monomers. Said filler is capable of indoor and/or thermal curing. Essential property of said filler is in that after said curing it forms appropriate material for said panel, in particular anti-noise, in particular safety panel, in particular at least partially translucent, in particular transparent, as well as completely non-transparent, said material preferably polymethylmethacrylate (hereinafter referred to as PMMA), but it may be also any material that is used for said panels. It is desirable if the plate is transparent, translucent or at least partially translucent, and PMMA allows for this, but it is not the only such material with such properties. After curing, preferably hardening, both said base plates are removed, and if necessary, panel is trimmed to desired dimensions, removing said spacers, preferably seals, in the process.

For the purposes of this application, the terms string, reinforcing string, fiber, cable, wire and thread aer used interchangeably, but in any case such element describes reinforcing element imbedded into said panel, in particular to improve safety and mechanical properties of said panel.

For the purposes of this application, the term "plurality" is used for two or more pieces. Thus, the term "plurality of the reinforcing strings" means that the reinforcing string is comprised of at least two pieces.

Said spacers act as gaskets. However, in general, there can be separate gaskets erected beyond, or in front of spacers.

Said spacer can be attached to respective base plate by means of an intermediate layer, which can serve as an adhesive attaching said spacer to said respective base plate.

For the purposes of this application the term "reinforcing" means at least one reinforcing string, preferably a plurality of strings that can be run in a substantially parallel direction or may intersect at any angle. There may be a network of reinforcing strings. Reinforcing strings can be of any material, but usually are made of polyamide fiber, but may be made of steel, in the form of cables or wires, or may be of combination of said materials (e.g. steel core with polyamide coating or similar).

This panel, in particular safety panel is used particularly for anti-noise purposes, but also for other protective purposes. Desirable are transparent or translucent, at least semi-transparent panels, however, they may be also completely opaque (i.e. non-transparent or non-translucent) panels. As already mentioned, these panels are reinforced with at least one reinforcement string. This is usually a polyamide fiber, a monofilament, but can also be a metal, such as steel wire or steel cable, or a coextruded filament. Reinforcement string is fully submerged into the solidified filler throughout its length.

It should be stressed that it is not necessary that said filler is acrylic. It can be from other material with desired properties such as polyamide, glass, it can be made of composite material, it can be assembled from more than one layer of glass, or composite glass, with intermediate space filled with fluid layer, such as adhesive. It can also be made of composite material, or solid layer filled with fluid filler.

Said filler, at least partially fluid and / or able to creep is selected from the group consisting of: a substantially liquid filler and/or filler capable of creep, preferably selected from an acrylic binder, a prepolymer, partially polymerized MMA, a mixture of acrylic monomers, in particular other than PMMA, said filler capable of hardening and / or filling of the intermediate space between said first base plate (1) and said second base plate (9).

A method according to this invention optionally comprises the further step of arranging said first spacer (2) onto said base plate (1) so that between said first base plate (1) and said spacer (2) a first intermediate layer (7), preferably adhesive, is arranged.

A method according to this invention optionally comprises the further step of arranging said second base plate (9) onto the said surface of said second spacer (6) such that between said surface of said second spacer (6) and said second base plate (9) a second intermediate layer (8), preferably adhesive, is arranged.

A method according to this invention optionally comprises insertion of two sided adhesive means (13) preferably two sided adhesive tape between said first spacer (2) and said second spacer (5). In this case the two sided adhesive means (13) preferably two sided adhesive tape is positioned onto said support surface (3) of said first spacer (2), onto this two sided adhesive means (13) preferably two sided adhesive tape said reinforcing string (4) or plurality thereof is positioned, and onto said reinforcing string (4) or plurality thereof said second spacer is positioned.

Said base plates may be made of any suitable material with appropriate stiffness and material properties. The best results were obtained with glass plates which enable visual inspection of filler material during its introduction into intermediate space between said first base plate and said second base plate.

Said spacers are usually gaskets, preferably PVC gaskets. Their surface may be corrugated, for better interconnection, or smooth, they may be of various forms such as rectangular, square, round, full, or partially full. These gaskets substantially prevent leakage and / or extruding of said filler after said filler has substantially filled said intermediate space between said first base plate (1) and said second base plate (9) with said filler and / or to substantially prevent ingress of water while said panel is submerged, fully, or partially, in water pool.

A method according to this invention optionally comprises more than one reinforcing string. The plurality of said reinforcing string (4) or plurality thereof are arranged so that the parts of said reinforcing string (4) or plurality thereof either intersect with each other or do not mutually intersect or in part intersect with each other and in the remaining part do not mutually intersect.

In embodiment of this invention the position of said strings approximately equally distant from either base plate (and resulting panel surface) can be achieved if said first spacer (2) and said second spacer (5) are approximately of the same thickness, resulting in said reinforcing strings (4), before filling of said intermediate space between said first base plate (1) and said second base plate (9), approximately equally spaced from said first base plate (1) and said second base plate (9).

After curing, preferably hardening, said panel can be cut to desired dimensions. By cutting, the spacers and/or gaskets are cut off, and rectangular shape of said panel is ensured if there are deformations due to unequal shrinking. Of course there is no need for panels to be cut in rectangular fashion, other forms can be achieved such as round, square, or any other desired form.

Said gaskets are usually PVC gaskets, usually disposable.

The method according to this invention comprises arranging of said reinforcing string (4) or plurality thereof onto support surface (3) of said first spacer (2). In an non-claimed variant, said reinforcing string (4) or plurality thereof can be positioned onto said support surface (3) each separately. But in order to make method faster said reinforcing string (4) or plurality thereof according to the invention are first positioned into a frame (11). Said reinforcing string (4) or plurality thereof can be threaded through openings of said frame (11). In particular, said frame (11) is preferably larger than larger of said base plates (1, 9) and / or preferably of such a size that said frame (11) substantially loosely rests onto said second base plate (9). Arranging of at least one said reinforcing string (4) onto said support surface (3) of said first spacer (2) is carried out so as to arrange said frame (11) onto said second base plate (9), so that said reinforcing string (4) or plurality thereof is at least partially in contact with said support surface (3) of said first spacer (2). In a preferred embodiment of this invention said frame (11) is provided with slits, holes, or their equivalents (12), through which said reinforcing string (4) or plurality thereof is threaded, so as to form a network, wherein said network is comprised from sections of said reinforcing string (4) or plurality thereof, said sections of said reinforcing string (4) or plurality thereof either intersecting with each other, not intersecting with each other, or some of said sections of said reinforcing string (4) or plurality thereof intersecting with remainder not intersecting with each other. After threading of said reinforcing string (4) or plurality thereof into said frame (11) has been completed, said frame (11) is arranged onto said second base plate (9), so that said reinforcing string (4) or plurality thereof is at least partially in contact with said support surface (3) of said first spacer (2). This step enables faster assembly of panel according to this invention. After curing, preferably hardening, of said filler, at least partially fluid and / or able to creep, said frame (11) is removed, preferably in such a way that reinforcing string (4) or plurality thereof are cut in a space formed between cured (hardened) panel and said frame (11), and said frame (11) is then removed.

Said frame (11) may be comprised of an upper part which is provided with slits, holes, or their equivalents (12), and a lower part, comprising perimeter subframe (14). Said perimeter subframe (14) can be positioned, preferably substantially loosely, either onto a third base plate (10) during threading of said reinforcing string (4) or plurality thereof or onto said second base plate (9) during performing of method according to this invention. Of course, there is no need to use said third base plate (10), threading of said reinforcing string (4) or plurality thereof can be achieved by different means such as threading said reinforcing string (4) or plurality thereof into said frame (11) without any help, or by different set of spacers holding said frame (11) form, or any other way achieving equivalent result of keeping frame (11) essentially in desired form while tensioning said reinforcing string (4) or plurality thereof, said frame (11) usually liable to some form of deformation.

A method according to this invention therefore optionally comprises step of said perimeter subframe (14) is resting, preferably substantially loosely, on said third base plate (10), and through said slits, holes, or their equivalents (12) said reinforcing string (4) or plurality thereof is threaded, so as to form a network, wherein said network is comprised from sections of said reinforcing string (4) or plurality thereof, said sections of said reinforcing string (4) or plurality thereof either intersecting with each other, not intersecting with each other, or some of said sections of said reinforcing string (4) or plurality thereof intersecting with remainder not intersecting with each other.

Said frame (11) may be made from single piece, or of several pieces that are assembled in accordance with the claims. Said frame (11) is preferably made of metal, but can be also made of different or other materials, such as plastic materials with suitable mechanical properties so said frame (11) is suitably stiff even after tensioning of said reinforcing string (4) or plurality thereof which has been threaded into said frame (11).

Step of threading of said reinforcing string (4) or plurality thereof into said frame (11) can be achieved by said frame (11) without said reinforcing string (4) or plurality thereof positioning substantially loosely onto a third base plate (10) so said third base plate (10) substantially limits bending, yielding or other form of deformation of said frame (11). Then, reinforcing string (4) or plurality thereof is threaded into said frame (11), and suitably tensioned. Then said frame (11) is removed from said third base plate (10). Then said frame (11) with reinforcing string (4) or plurality thereof threaded into said frame (11) is positioned over partially assembled device in accordance with this description, said assembly comprised of said first base plate (1), and said spacer (2), with or without first intermediate layer (7). Then, said frame (11) is lowered in direction (H) toward said first base plate (1) until such time that said reinforcing string (4) or plurality thereof comes into contact with said support surface (3) of said first spacer (2). Then said second spacer (5) is positioned onto said reinforcing string (4) or plurality thereof threaded into said frame (11), and said method is carried onward in accordance with description herein.

According to this invention each of said spacers (2, 5) can be in single piece of composed of plurality of pieces.

According to this invention curing, preferably hardening, of said filler, at least partially fluid and / or able to creep, preferably polymerization, can be carried out at least partially in a water pool, said panel either fully, or partially submerged in water comprised in said water pool. In this case said spacers (2, 5) serve as gaskets not only to prevent extrusion of said filler, at least partially fluid and / or able to creep but also to substantially prevent ingress of water into intermediate space as formed by said first base plate (1) and said second base plate (9).

The method according to this invention optionally comprises a further step after curing, preferably hardening, of said filler, at least partially fluid and / or able to creep, preferably a polymerization, the further step of heat treatment of said panel is carried out, in particular in order to improve the properties of said panel, particularly safety features of said panel.

This invention also comprises panel, in particular anti-noise, in particular safety panel, in particular at least partially translucent, in particular transparent, as well as completely non-transparent, manufactured according to the disclosed method.

Method according to this invention therefore enables arbitrary movement of said reinforcing string (4) or plurality thereof away from surface of said panel according to this invention toward the center, that is, away from the outer surfaces of the plates. In addition to the anti-noise properties said panels according to this invention allow for a protection in case of collisions. Reinforcing string (4) or plurality thereof, or in a preferred embodiment a polyamide fiber, which are substantially horizontally and/or vertically arranged in said panel in the event of a collision retain particles of PMMA or other copolymers that just do not fall off from the panels and do not make additional material damage to the surroundings and persons, which are located in the vicinity of the guard rails constructed of panels manufactured according to method subject of this invention.

With the use of double PVC gaskets and the double-sided adhesive tape in accordance to preferred embodiment said reinforcing string (4) or plurality thereof can be placed anywhere across the depth of said panel according to invention, depending on the thickness of PVC gaskets. Special corrugated PVC gaskets and the double-sided tape prevent ingress of water, despite said reinforcing string (4) or plurality thereof located between the two gaskets during the polymerization, which is carried out in the water pool.

Quality of safety prevention during collision is therefore no longer dependent on side of said collision impact. Optimum deviation of said reinforcing string (4) or plurality thereof toward the center plane of the intermediate space formed between said first base plate (1) and said second base plate (9) enables said panel according to invention to be hit from either side of said panel during collision between incoming items and said panel.

A new way of producing said panels as presented herein in addition to simple and reliable manufacturing also allows for full control over the displacement of reinforcing string (4) or plurality thereof from either of base plates (1, 9). The controlled clearance allows for prevention of possible errors occurring during polymerization, if reinforcing string (4) or plurality thereof touch surface of said base plates (1, 9), while all other reinforcing string (4) or plurality thereof are evenly and freely distributed away from either of said base plates (1, 9) toward the interior of said panel.

In the field of manufacturing sound barriers of the panels, particularly the protective novelty important, as the manufacturing process allows for control of the distance from the middle of the reinforcement panel or the controlled deviation of the reinforcement of the panel surfaces.

In one of the embodiments as a spacer specially corrugated PVC gasket in combination with a double-sided adhesive tape is used for sealing of said mould. Double-sided adhesive tape can be replaced with double sided adhesive mass of acrylate copolymer and monomer, and synthetic micro-spheres filler, which gives it a unique high elastic properties. These allow corrugated gaskets to stick one to another and are essentially waterproof. The elasticity of said solution allows to envelop reinforcing string (4) or plurality thereof and allow for sealing. Each reinforcing string (4) or plurality thereof, which enters from the outer side of the seal into the interior of the mould is namely a potential opening through which the water in the water pool can enter into the intermediate space formed by both base plates (1,9) during polymerization

### Particular embodiment

Below actual example of a panel manufactured in accordance with this invention is presented.

### 1) Manufacture of the prepolymer:

By heating the monomers with added initiator radical polymerization is induced. Mixture of monomers is heated until such time that the desired conversion of the polymer is achieved which is in the range between 15 to 20%. The first part of the polymerization is carried out in the reactor. The reaction is stopped by cooling the reaction mixture.

### 2) Preparation of reinforcements:

Pre-treated polyamide fibers are threaded into metal frame.

### 3) Preparation of PVC gaskets:

PVC gaskets are cut to the desired dimension and glued on all four corners. Seals are corrugated and of different dimensions. They vary in length, as well as the thickness. Thickness of PVC gaskets depend on final thickness of panels produced. For the production of a panel two sets of seals are needed, each set consisting of 4 gaskets, which are then glued together in a rectangle. During the manufacture multiple cords are attached to said gaskets to help with fixing of PVC gaskets to the glass during assembly of said mould. Each set of PVC gaskets glued connections is taped over with EHB ("Extra high bond") tape to fill the cracks through which the water from water pool could enter during polymerization into inside of said mould.

### 4) Assembly of the mould:

Assembly of said mould is performed on line for panel manufacturing. The first glass is lifted using vacuum clamps and upper PVC gasket is set on it. Over PVC gasket the metal frame with embedded taut monofilaments is positioned. The second PVC gasket is set onto the second glass. The gasket is fixed onto said glass using cords which were previously attached to said PVC gasket. After PVC gasket is set on the glass plate, two sided adhesive tape is glued onto all four sides of PVC gasket. Said tape should be set onto middle of said gasket and may not extend over said gasket toward interior of said mould.

After two sided adhesive tape is set, the glass is moved using transport tables under upper glass with PVC gasket and frame. The upper glass is lowered onto lower glass, and PVC gaskets are glued with help of two sided tape. After the glass has been lowered, the cords for fixing PVC gasket onto the glass are removed. Glass plates are clamped together with special clamps. Only three sides of so assembled mould are fixed.

### 5) Feeding the reaction mixture into the mould:

Prepolymer manufactured under point 1), above in the second stage UV stabilizers, initiators, are added, and coloring of said panels is desired also pigments. After mixing all of these additives, the reaction mixture is poured into a mould prepared as described in point 4) above.

### 6) The polymerization in the water pool:

Polymerization of plates takes place in the water pool. When the moulds are filled, they are transferred into a water pool which is preheated to a certain temperature. The temperature and time of polymerization in the water will depend on the thickness of the panel.

### 7) Post-polymerization:

After final polymerization plate is subjected a high temperature in an air furnace. With exposure to high temperatures more complete polymerization of plates is allowed, thereby their properties are improved.

### Description of figures

Below, the invention is further described with help of figures, said figures forming part of this patent application and presenting:

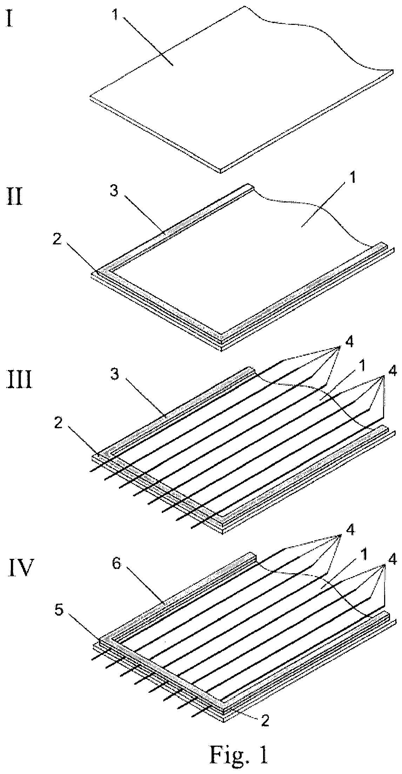

Figure 1 presents some phases of a non-claimed method, denoted with Roman numerals from I to IV. Figure shows first base plate (1), first spacer (2), support surface (3) of first spacer (2), reinforcing string (4), second spacer (5), surface of second spacer (6).

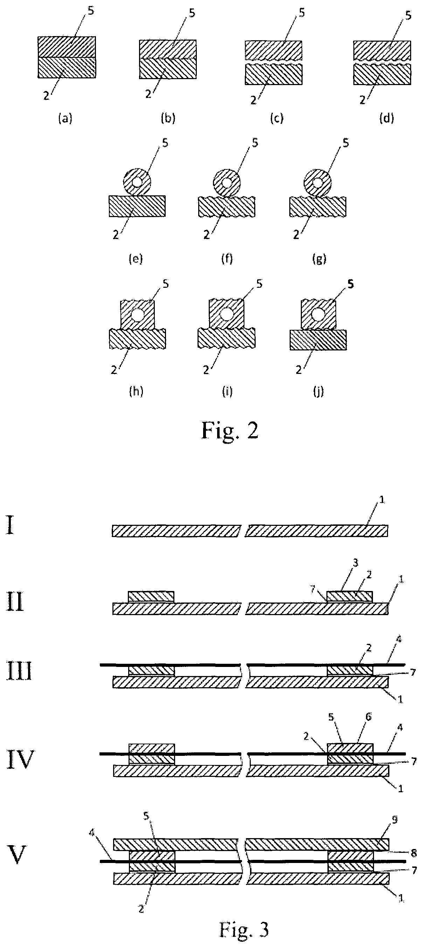

Figure 2 shows cross sections of spacers, showing first spacer (2), second spacer (5). Figure 2 show from (a) to (j) several variations of spacers. Figures 2(a) and 2(b) as well as 2(e) to 2(j) show first spacer (2) engaged with second spacer (5) whereas figures 2(c) and 2(d) show first spacer (2) disengaged from second spacer (5). There are several options shown, from opposing surfaces being smooth, or corrugated, either in forms of ridges or waves. Said spacers in cross section can be rectangular, or round, or flat, or their combinations. Basically, the variations are presented aimed at increasing of sealing after spacers have been put in contact, especially with added reinforcing string so this combination essentially seals preventing either ingress of water from water pool during curing or extrusion of filler if in fluid form after said filler has been filled into intermediate space formed by first base plate (1) and second base plate (9).
Figure 3 presents several phases of a non-claimed method, denoted with Roman numerals from I to V. Figure shows first base plate (1), first spacer (2), support surface (3) of first spacer (2), reinforcing string (4), second spacer (5), surface of second spacer (6), first intermediate layer (7) between first base plate (1) and first spacer (2), second intermediate layer (8) between second spacer (5) and second base plate (9), second base plate (9).
   Phases of the method in figure 3 show arranging of first base plate (1) preferably essentially horizontally which is followed by arranging of first intermediate layer (7) onto said first base plate (1), then arranging of first spacer (2) preferably gasket, preferably PVC gasket, more preferably PVC gasket with corrugated support surface (3) onto first intermediate layer (7), then arranging said reinforcing string (4) or plurality thereof onto said support surface (3) of said first spacer (2), then arranging of second spacer (5), preferably gasket, preferably PVC gasket, more preferably PVC gasket with corrugated surface onto said reinforcing string (4) or plurality thereof. This is then followed by arranging of second intermediate layer (8) onto surface (6) of second spacer (5), and arranging of second base plate (9) on second intermediate layer (8).

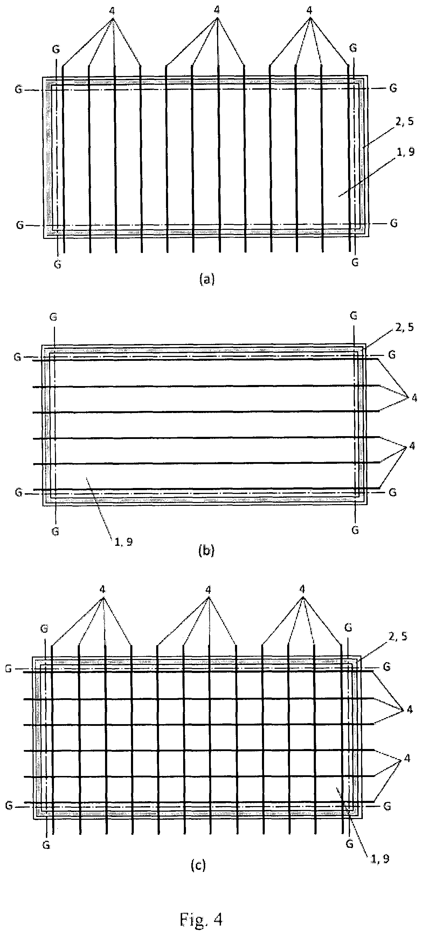

Figure 4 shows top view of panel after curing (preferably, hardening, preferably polymerization) with reinforcing string (4) or plurality thereof essentially transversal to longer axis of said panel (Fig. 4(a)), with reinforcing string (4) or plurality thereof essentially parallel to longer axis of said panel (Fig. 4(b)), with intersected reinforcing string (4) or plurality thereof (web) (Fig. 4(c)). Figure 4 shows base plates (1, 9), spacers (2, 5), direction of cuts after removal of said base plates (1, 9) (G-G), and reinforcing string (4) or plurality thereof.
Figure 4 shows that after finished curing and removal of said base plates (1, 9) panels manufactured in accordance with this invention can be cut to pre-set dimensions, and at the same time remove spacers so panel without spacers remain whereby said reinforcing string (4) or plurality thereof can be either parallel to each other ((a), (b)), or intersected (c).

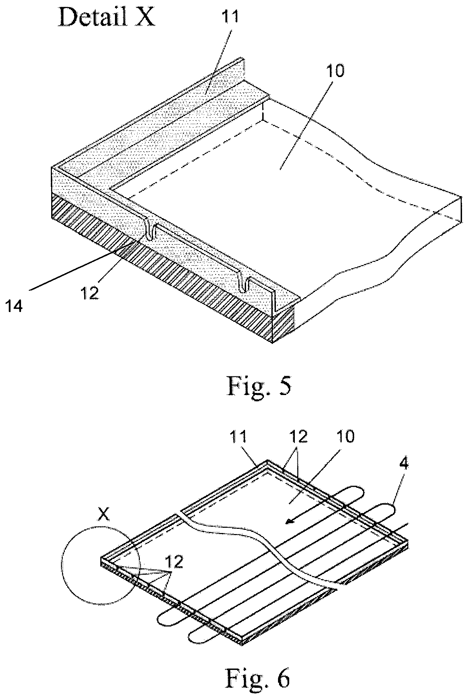

Figure 5 shows detail X of a frame (11), namely corner of frame (11) whereby said frame (11) is positioned onto third base plate (10). Perimeter subframe (14) is also seen, said perimeter subframe (14) enveloping said third base plate (10), preferably loosely. In addition, slits, holes, or their equivalents (12) into said frame (11) are seen, said slits, holes, or their equivalents (12) used for threading said reinforcing string (4) or plurality thereof.
Figure 6 shows schematics of threading said reinforcing string (4) or plurality thereof. Said threading of said reinforcing string (4) or plurality thereof in accordance with this figure starts at first end of said frame (11), and continues toward other end of said frame (11) through each consecutive slit, hole, or its equivalent (12) so essentially parallel or criss-cross pattern is formed from said reinforcing string (4) or plurality thereof. Said frame (11) is positioned onto said third base plate (10) to essentially conserve shape. Said reinforcing string (4) or plurality thereof is made appropriately taut either at each threading through said slit, hole, or its equivalent (12) or at the end of threading. Said reinforcing string (4) or plurality thereof at the end of threading makes either net made of parallel strings, intersected strings, or partially parallel, partially intersected strings.

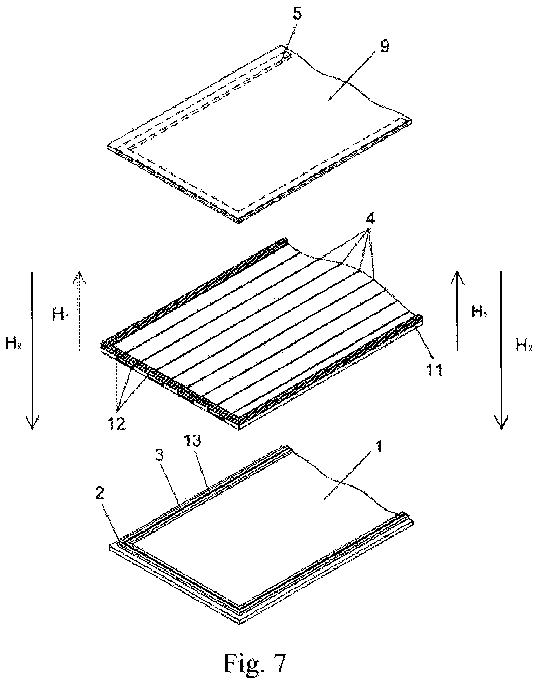

Figure 7 shows arranging of said reinforcing string (4) or plurality thereof as threaded into said frame (11) in form of a net formed by essentially parallel sections of said reinforcing string (4) or plurality thereof onto assembly comprised of said second spacer (5), and said second base plate (9) in direction H1, and then arranging of so arranged assembly in direction H2 onto assembly comprised of first base plate (1), first spacer (2). Figure 7 also shows two sided adhesive means (13) preferably two sided adhesive tape arranged on said first spacer (2) which is optional, but useful in this particular embodiment. Instead of two sided adhesive tape two sided adhesive mass can be used.

## Claims

1. A method for panel manufacturing, in particular anti-noise, in particular safety panel, in particular at least partially translucent, in particular transparent, said panel comprising at least one reinforcing string (4) or a plurality thereof, in a form of a thread, or wire, or cable, or a filament, or a monofilament, said panel comprising a filler, preferably polymethylmethacrylate, said reinforcing string (4) or plurality thereof extending along the entire length of the filling material, said method comprising the following steps:
a. arranging a first base plate (1), preferably substantially horizontally;
b. arranging onto said first base plate (1) a first spacer (2), preferably a gasket, and more preferably a PVC seal, said first spacer (2) having a thickness of at least 4 mm, said first spacer (2) either being a single piece or comprised of a plurality of pieces;
c. arranging of at least one of said reinforcing string (4) or plurality thereof by means of a frame (11).
d. tensioning of said reinforcing string (4) or plurality thereof so that in the final panel, a minimum distance between said first base plate (1) and said reinforcing string is at least 3 mm over the entire length of said reinforcing string (4) or plurality thereof, preferably in such a way that maximum deflection of said reinforcing string (4) or plurality thereof from the ideal line connecting both ends of said reinforcing string (4) or plurality thereof above said first base plate (1) is 0,1 percent,
e. arranging onto said frame comprising said reinforcing string (4) or plurality thereof a second baseplate (9), said second base prate (9) being assembled to a surface (6) of a second spacer (5), said second spacer (5) having a thickness of at least 4 mm, said second spacer (5) either being a single piece or comprised of a plurality of pieces;
f. arranging the assembly of said frame (11), said second base plate (9) and of said second spacer (5) onto the assembly of said first base plate (1) and said first spacer (2); ;
g. filling so formed intermediate space between said first base plate (1) and said second base plate (9) with said filler, wherein said filler is either homogeneous or heterogeneous, at least partially fluid and / or able to creep;
h. curing, of said filler;
i. removing said first base plate (1) and said second base plate (9) with no regard to the order of said removal of said base plates.

2. Method according to claim 1, **characterized in that** said filler, at least partially fluid and / or able to creep is selected from the group consisting of: a substantially liquid filler and/or filler capable of creep, preferably selected from an acrylic binder, a prepolymer, partially polymerized MMA, a mixture of acrylic monomers, in particular other than PMMA, said filler capable of hardening and / or filling of the intermediate space between said first base plate (1) and said second base plate (9), a composite material comprised of a layer of a substantially solid material such as glass, the space between the individual layers of essentially solid material filled by essentially said liquid filler material.

3. Method according to any one of the preceding claims, **characterized in that** it comprises the further step of arranging said first spacer (2) onto said base plate (1) so that between said first base plate (1) and said spacer (2) a first intermediate layer (7), preferably adhesive, is arranged.

4. Method according to any one of the preceding claims, **characterized in that** it comprises the further step of arranging said second base plate (9) onto the said surface of said second spacer (5) such that between said surface of said second spacer (5) and said second base plate (9) a second intermediate layer (8), preferably adhesive, is arranged.

5. Method according to any one of the preceding claims, **characterized in that** two sided adhesive means (13) preferably two sided adhesive tape are inserted between said first spacer (2) and said second spacer (5).

6. Method according to any one of the preceding claims, **characterized in that** said spacers substantially prevent leakage and / or extruding of said filler after said filler has substantially filled said intermediate space between said first base plate (1) and said second base plate (9) with said filler and / or substantially prevent ingress of water while said panel is submerged, fully, or partially, in a water pool.

7. Method according to any one of the preceding claims, **characterized in that** said reinforcing string (4) or plurality thereof is arranged so that parts of said reinforcing string (4) or plurality thereof, either intersect with each other or do not mutually intersect or in part intersect with each other and in remaining part do not mutually intersect.

8. Method according to any one of the preceding claims, **characterized in that** said first spacer (2) and said second spacer (5) are approximately of the same thickness, resulting in said reinforcing string (4) or plurality thereof, before filling of said intermediate space between said first base plate (1) and said second base plate (9), being approximately equally spaced from said first base plate (1) and said second base plate (9).

9. Method according to any one of the preceding claims, **characterized in that** said frame (11) is comprised of perimeter subframe (14), said frame (11) is larger than said base plates (1, 9) and / or of such a size that said frame (11) substantially loosely rests onto said second base plate (9).

10. Method according to any one of the preceding claims, **characterized in that** the step of tensioning of said reinforcing string (4) or plurality thereof is performed by means of said frame (11) being provided with slits, holes, or their equivalents (12), through which said reinforcing string (4) or plurality thereof is threaded, so as to form a network, wherein said network is comprised from sections of said reinforcing string (4) or plurality thereof, said sections of said reinforcing string (4) or plurality thereof either intersecting with each other, not intersecting with each other, or some of said sections of said reinforcing string (4) or plurality thereof intersecting with remainder not intersecting with each other.

11. Method according to claim 10, **characterized in that** during step of threading of said reinforcing string (4) or plurality thereof into said frame (11) said frame (11) is positioned substantially loosely onto a third base plate (10), so that a perimeter subframe (14) of said frame (11) is resting, preferably substantially loosely on said third base plate (10), and through said slits, holes, or their equivalents (12) said reinforcing string (4) or plurality thereof is threaded, so as to form a network, wherein said network is comprised from sections of said reinforcing string (4) or plurality thereof.

12. Method according to any one of the preceding claims, **characterized in that** said frame (11) can be made from single piece, or of several pieces that are assembled in accordance with any one of the preceding claims.

13. Panel, in particular anti-noise, in particular safety panel, in particular at least partially translucent, in particular transparent, manufactured according to any one of the preceding claims.

## Patentansprüche

1. Verfahren zur Plattenherstellung, insbesondere Lärmschutzplatten, insbesondere Sicherheitsplatten, insbesondere zumindest teilweise durchscheinend, insbesondere durchsichtig, wobei die Platte mindestens eine verstärkende Schnur (4) oder eine Vielzahl davon in Form eines Fadens oder Drahtes oder Kabels oder einer Faser oder einer Linzelfaser umfasst, wobei die Platte ein Füllmittel, vorzugsweise Polymethylmethacrylat, umfasst, wobei sich die verstärkende Schnur (4) oder die Vielzahl davon entlang der gesamten Länge des Füllmaterials erstreckt, wobei das Verfahren die folgenden Schritte umfasst:
a. Anordnen einer ersten Grundplatte (1), vorzugsweise im Wesentlichen horizontal;
b. Anordnen eines ersten Abstandhalters (2), vorzugsweise einer Dichtung und weiter bevorzugt einer PVC-Dichtung, auf der ersten Grundplatte (1), wobei der erste Abstandshalter (2) eine Dicke von mindestens 4 mm aufweist, wobei der erste Abstandshalter (2) entweder einstückig ist oder eine Vielzahl von Stücken umfasst;
c. Anordnen von mindestens einer von der verstärkenden Schnur (4) oder der Vielzahl davon mithilfe eines Rahmens (11);
d. Spannen der verstärkenden Schnur (4) oder der Vielzahl davon, so dass bei der letzten Platte ein Mindestabstand zwischen der ersten Grundplatte (1) und der verstärkenden Schnur über die gesamte Länge der verstärkenden Schnur (4) oder der Vielzahl davon mindestens 3 mm beträgt, vorzugsweise derart, dass die maximale Ablenkung der verstärkenden Schnur (4) oder der Vielzahl davon von der idealen Linie, die beide Enden der verstärkenden Schnur (4) oder der Vielzahl davon verbindet, über der ersten Grundplatte (1) 0,1 Prozent beträgt;
e. Anordnen einer zweiten Grundplatte (9) auf dem Rahmen, der die verstärkende Schnur (4) oder die Vielzahl davon umfasst, wobei die zweite Grundplatte (9) auf einer Fläche (6) eines zweiten Abstandshalters (5) montiert ist, wobei der zweite Abstandshalter (5) eine Dicke von mindestens 4 mm aufweist, wobei der zweite Abstandshalter (5) entweder einstückig ist oder eine Vielzahl von Stücken umfasst;
f. Anordnen der Anordnung des Rahmens (11), der zweiten Grundplatte (9) und des zweiten Abstandshalters (5) auf der Anordnung der ersten Grundplatte (1) und des ersten Abstandhalters (2);
g. Füllen des so gebildeten Zwischenraums zwischen der ersten Grundplatte (1) und der zweiten Grundplatte (9) mit dem Füllmittel, wobei das Füllmittel entweder homogen oder heterogen, zumindest teilweise fluid und/oder kriechfähig ist;
h. Aushärten des Füllmittels;
i. Entfernen der ersten Grundplatte (1) und der zweiten Grundplatte (9) in beliebiger Reihenfolge des Entfernens der Grundplatten.

2. Verfahren nach Anspruch 1, **dadurch gekennzeichnet, dass** das Füllmittel, das zumindest teilweise fluid und/oder kricehfähig ist, aus der Gruppe ausgewählt ist, die aus Folgendem besteht:
einem im Wesentlichen flüssigen und/oder kriechfähigen Füllmittel, vorzugsweise ausgewählt aus einem Acrylbindemittel, einem Prepolymer, einem teilweise polymerisiertem MMA, einem Gemisch aus Acrylmonomeren, insbesondere anderen als PMMA, wobei das Füllmittel aushärten und/oder den Zwischenraum zwischen der ersten Grundplatte (1) und der zweiten Grundplatte (9) füllen kann, wobei ein Verbundmaterial eine Schicht eines im Wesentlichen festen Materials wie beispielsweise Glas umfasst, wobei der Raum zwischen den einzelnen Schichten des im Wesentlichen festen Materials mit dem im Wesentlichen flüssigen Füllstoffmaterial gefüllt ist.

3. Verfahren nach einem der vorstehenden Ansprüche, **dadurch gekennzeichnet, dass** es ferner den Schritt des Anordnens des ersten Abstandshalters (2) auf der Grundplatte (1) umfasst, so dass zwischen der ersten Grundplatte (1) und dem Abstandshalter (2) eine erste Zwischenschicht (7), vorzugsweise haftend, angeordnet ist.

4. Verfahren nach einem der vorstehenden Ansprüche, **dadurch gekennzeichnet, dass** es ferner den Schritt des Anordnens der zweiten Grundplatte (9) auf der Fläche des zweiten Abstandhalters (5) umfasst, so dass zwischen der Fläche des zweiten Abstandshalters (5) und der zweiten Grundplatte (9) eine zweite Zwischenschicht (8), vorzugsweise haftend, angeordnet ist.

5. Verfahren nach einem der vorstehenden Ansprüche, **dadurch gekennzeichnet, dass** doppelseitige Klebemittel (13), vorzugsweise doppelseitiges Klebeband, zwischen dem ersten Abstandshalter (2) und dem zweiten Abstandshalter (5) eingefügt werden.

6. Verfahren nach einem der vorstehenden Ansprüche, **dadurch gekennzeichnet, dass** die Abstandshalter im Wesentlichen das Auslaufen und/oder Extrudieren des Füllmittels verhindern, nachdem das Füllmittel den Zwischenraum zwischen der ersten Grundplatte (1) und der zweiten Grundplatte (9) im Wesentlichen mit dem Füllmittel gefüllt hat, und/oder im Wesentlichen das Eindringen von Wasser verhindern, während die Platte ganz oder teilweise in ein Wasserbecken getaucht ist.

7. Verfahren nach einem der vorstehenden Ansprüche, **dadurch gekennzeichnet, dass** die verstärkende Schnur (4) oder die Vielzahl davon so angeordnet ist, dass Teile der verstärkenden Schnur (4) oder der Vielzahl davon sich entweder kreuzen oder sich nicht kreuzen oder sich teilweise kreuzen und sich in einem restlichen Teil nicht kreuzen.

8. Verfahren nach einem der vorstehenden Ansprüche, **dadurch gekennzeichnet, dass** der erste Abstandshalter (2) und der zweite Abstundshalter (5) ungefähr gleich dick sind, wodurch die verstärkende Schnur (4) oder die Vielzahl davon vor dem Füllen des Zwischenraums zwischen der ersten Grundplatte (1) und der zweiten Grundplatte (9) ungefähr gleich weit von der ersten Grundplatte (1) und der zweiten Grundplatte (9) beabstandet ist.

9. Verfahren nach einem der vorstehenden Ansprüche, **dadurch gekennzeichnet, dass** der Rahmen (11) einen Umfangsteilrahmen (14) umfasst, wobei der Rahmen (11) größer als die Grundplatten (1, 9) ist und/oder eine Größe aufweist, dass der Rahmen (11) im Wesentlichen lose auf der zweiten. Grundplatte (9) sitzt.

10. Verfahren nach einem der vorstehenden Ansprüche, **dadurch gekennzeichnet, dass** der Schritt des Spannens der verstärkenden Schnur (4) oder der Vielzahl davon mithilfe des Rahmens (11) durchgeführt wird, der mit Schlitzen, Löchern oder ihren Äquivalenten (12) bereitgestellt ist, durch die die verstärkende Schnur (4) oder die Vielzahl davon gefädelt ist, um ein Netzwerk zu bilden, wobei das Netzwerk Abschnitte der verstärkenden Schnur (4) oder der Vielzahl davon umfasst, wobei sich die Abschnitte der verstärkenden Schnur (4) oder der Vielzahl davon entweder kreuzen, sich nicht kreuzen oder sich einige der Abschnitte der verstärkenden Schnur (4) oder der Vielzahl davon, die sich mit dem Rest kreuzen, nicht kreuzen.

11. Verfahren nach Anspruch 10, **dadurch gekennzeichnet, dass** während des Schritts des Fädelns der verstärkenden Schnur (4) oder der Vielzahl davon durch den Rahmen (11) der Rahmen (11) im Wesentlichen lose auf einer dritten Grundplatte (10) positioniert ist, so dass ein Umfangsteilrahmen (14) des Rahmens (11)vorzugsweise im Wesentlichen lose auf der dritten Grundplatte (10) sitzt und durch die Schlitze, Löcher oder ihre Äquivalente (12) die verstärkende Schnur (4) oder die Vielzahl davon gefädelt ist, um ein Netzwerk zu bilden, wobei das Netzwerk Abschnitte der verstärkenden Schnur (4) oder der Vielzahl davon umfasst.

12. Verfahren nach einem der vorstehenden Ansprüche, **dadurch gekennzeichnet, dass** der Rahmen (11) aus einem Stück oder aus mehreren Stücken bestehen kann, die gemäß einem der vorstehenden Ansprüche montiert werden können.

13. Platten, insbesondere Lärmschutzplatten, insbesondere Sicherheitsplatten, insbesondere zumindest teilweise durchscheinend, insbesondere durchsichtig, die nach einem der vorstehenden Ansprüche hergestellt sind.

## Revendications

1. Procédé de fabrication de panneau, en particulier anti-bruit, en particulier un panneau de sécurité, en particulier au moins partiellement translucide, en particulier transparent, ledit panneau comprenant au moins un cordon de renfort (4) ou une pluralité de celui-ci, sous la forme d'un brin, ou un fil, ou un câble, ou un filament, ou un monofilament, ledit panneau comprenant un agent de remplissage, de préférence du polyméthylméthacrylate, ledit cordon de renfort (4) ou une pluralité de ceux-ci s'étendant sur toute la longueur du matériau de remplissage, ledit procédé comprenant les étapes suivantes :
a. l'agencement d'une première plaque de base (1), de préférence sensiblement horizontalement ;
b. l'agencement sur ladite première plaque de base (1) d'une première entretoise (2), de préférence un joint d'étanchéité, et plus préférablement un joint PVC, ladite première entretoise (2) ayant une épaisseur d'au moins 4 mm, ladite première entretoise (2) étant soit une pièce unique soit constituée d'une pluralité de pièces ;
c. l'agencement d'au moins l'un dudit cordon de renfort (4) ou de la pluralité de celui-ci au moyen d'un cadre (11),
d. la mise en tension dudit cordon de renfort (4) ou de la pluralité de celui-ci de façon à ce que dans le panneau final, une distance minimum entre ladite première plaque de base (1) et ledit cordon de renfort soit au moins à 3 mm sur toute la longueur dudit cordon de renfort (4) ou de la pluralité de celui-ci, de préférence de telle manière à ce qu'un fléchissement maximum dudit cordon de renfort (4) ou de la pluralité de ceux-ci par rapport à la ligne idéale joignant les deux extrémités dudit cordon de renfort (4) ou de la pluralité de celui-ci au-dessus de ladite première plaque de base (1) soit 0,1 %,
e. l'agencement sur ledit cadre comprenant ledit cordon de renfort (4) ou la pluralité de celui-ci d'une deuxième plaque de base (9), ladite deuxième plaque de base (9) étant assemblée sur une surface (6) d'une deuxième entretoise (5), ladite deuxième entretoise (5) ayant une épaisseur d'au moins 4 mm, ladite deuxième entretoise (5) étant soit une pièce unique soit constituée d'une pluralité de pièces ;
f. l'agencement de l'assemblage dudit cadre (11), de ladite deuxième plaque de base (9) et de ladite deuxième entretoise (5) sur l'assemblage de ladite première plaque de base (1) et de ladite première entretoise (2) ;
g. le remplissage de l'espace intermédiaire ainsi formé entre ladite première plaque de base (1) et ladite deuxième plaque de base (9) avec ledit agent de remplissage, dans lequel ledit agent de remplissage est soit homogène, soit hétérogène, au moins partiellement fluide et / ou en mesure de fluer ;
h. le durcissage, dudit agent de remplissage ;
i. le retrait de ladite première plaque de base (1) et ladite deuxième plaque de base (9) sans incidence de l'ordre dudit retrait desdites plaques de base.

2. Procédé selon la revendication 1, **caractérisé en ce que** ledit agent de remplissage, au moins partiellement fluide et / ou en mesure de fluer est sélectionné dans le groupe constitué de :
un agent de remplissage sensiblement liquide et/ou un agent de remplissage en mesure de fluer, de préférence sélectionné parmi un liant acrylique, un prépolymère, un MMA partiellement polymérisé, un mélange de monomères acryliques, en particulier autre que PMMA, ledit agent de remplissage en mesure de durcir et / ou remplir l'espace intermédiaire entre ladite première plaque de base (1) et ladite deuxième plaque de base (9), un matériau composite constitué d'une couche d'un matériau sensiblement solide, tel que du verre, l'espace entre les couches individuelles de matériau essentiellement solide rempli essentiellement par ledit matériau d'agent de remplissage liquide.

3. Procédé selon l'une quelconque des revendications précédentes, **caractérisé en ce qu'**il comprend l'étape supplémentaire d'agencement de ladite première entretoise (2) sur ladite plaque de base (1) de façon à ce que entre ladite première plaque de base (1) et ladite entretoise (2), une première couche intermédiaire (7), de préférence adhésive, soit agencée.

4. Procédé selon l'une quelconque des revendications précédentes, **caractérisé en ce qu'**il comprend l'étape supplémentaire d'agencement de ladite deuxième plaque de base (9) sur ladite surface de ladite deuxième entretoise (5) de manière à ce que entre ladite surface de ladite deuxième entretoise (5) et ladite deuxième plaque de base (9), une deuxième couche intermédiaire (8), de préférence adhésive, soit agencée.

5. Procédé selon l'une quelconque des revendications précédentes, **caractérisé en ce qu'**un moyen adhésif double face (13), de préférence une bande adhésive double face, est inséré entre ladite première entretoise (2) et ladite deuxième entretoise (5).

6. Procédé selon l'une quelconque des revendications précédentes, **caractérisé en ce que** lesdites entretoises empêchent sensiblement la fuite et/ ou l'extrusion dudit agent de remplissage après que ledit agent de remplissage a sensiblement rempli ledit espace intermédiaire entre ladite première plaque de base (1) et ladite deuxième plaque de base (9) avec ledit agent de remplissage et / ou empêche sensiblement la pénétration d'eau tandis que ledit panneau est immergé, totalement ou partiellement, dans un bassin.

7. Procédé selon l'une quelconque des revendications précédentes, **caractérisé en ce que** ledit cordon de renfort (4) ou la pluralité de celui-ci est agencé de façon à ce que des parties dudit cordon de renfort (4) ou de la pluralité de ceux-ci, soit se coupent les unes les autres soit ne se coupent pas mutuellement soit se coupent en partie les unes avec les autres et dans une partie restante ne se coupent pas mutuellement.

8. Procédé selon l'une quelconque des revendications précédentes, **caractérisé en ce que** ladite première entretoise (2) et ladite deuxième entretoise (5) sont approximativement de la même épaisseur, ce qui a pour résultat que ledit cordon de renfort (4) ou la pluralité de celui-ci, avant le remplissage dudit espace intermédiaire entre ladite première plaque de base (1) et ladite deuxième plaque de base (9), sont approximativement à égale distance de ladite première plaque de base (1) et ladite deuxième plaque de base (9).

9. Procédé selon l'une quelconque des revendications précédentes, **caractérisé en ce que** ledit cadre (11) est constitué d'un sous-cadre périmétrique (14), ledit cadre (11) est plus grand que lesdites plaques de base (1, 9) et / ou d'une taille telle que ledit cadre (11) repose de manière sensiblement lâche sur ladite deuxième plaque de base (9).

10. Procédé selon l'une quelconque des revendications précédentes, caractérisé en cc que l'étape de mise en tension dudit cordon de renfort (4) ou de la pluralité de celui-ci est exécutée au moyen dudit cadre (11) étant doté de fentes, trous, ou leurs équivalents (12), à travers lesquels ledit cordon de renfort (4) ou la pluralité de ceux-ci est enfilé, de façon à former un réseau, dans lequel ledit réseau est constitué de sections dudit cordon de renfort (4) ou de la pluralité de ceux-ci, lesdites sections dudit cordon de renfort (4) ou de la pluralité de celui-ci soit se coupant les unes les autres, soit ne se coupant pas les unes les autres, soit certaines desdites sections dudit cordon de renfort (4) ou de la pluralité de celui-ci coupant une partie restante ne se coupant pas les unes les autres.

11. Procédé selon la revendication 10, **caractérisé en ce que** pendant l'étape d'enfilage dudit cordon de renfort (4) ou la pluralité de celui-ci dans ledit cadre (11), ledit cadre (11) est positionné de manière sensiblement lâche sur une troisième plaque de base (10), de façon à ce qu'un sous-cadre périmétrique (14) dudit cadre (11) repose, de préférence de manière sensiblement lâche sur ladite troisième plaque de base (10), et à travers lesdites fentes, trous ou leurs équivalents (12) ledit cordon de renfort (4) ou la pluralité de celui-ci est enfilé, de façon à former un réseau, dans lequel ledit réseau est constitué de sections dudit cordon de renfort (4) ou de la pluralité de celui-ci.

12. Procédé selon l'une quelconque des revendications précédentes, **caractérisé en ce que** ledit cadre (11) peut être formé d'une seule pièce ou de plusieurs pièces qui sont assemblées selon l'une quelconque des revendications précédentes.

13. Panneau, en particulier anti-bruit, en particulier un panneau de sécurité, en particulier au moins partiellement translucide, en particulier transparent, fabriqué selon l'une quelconque des revendications précédentes.
